# EUROPÄISCHE PATENTANMELDUNG

(11) **EP 1 648 083 A2**
(43) Veröffentlichungstag der Anmeldung: **19.04.2006**
(21) Anmeldenummer: 05021089.7
(22) Anmeldetag: 28.09.2005
(51) Int. Cl.: H02P 27/00

(54) **Schaltungsanordnung zur Steuerung eines Elektromotors**

(30) Priorität: 13.10.2004 DE 102004049948
(71) Anmelder: WILO AG, 44263 Dortmund (DE)
(72) Erfinder: Wolff, Christian, 44149 Dortmund (DE); Stellmacher, Wolf-Rüdiger, 59427 Unna (DE)
(74) Vertreter: COHAUSZ DAWIDOWICZ HANNIG & SOZIEN

(57) **Zusammenfassung**

Die Erfindung betrifft Schaltungsanordnung (2) zur Steuerung insbesondere zum Ein- und Ausschalten der Motorstromzufuhr eines mit einer Wechselspannung beaufschlagbaren Elektromotors, insbesondere eines Spaltpolmotors einer Pumpe, der einen Stator mit zumindest einer Motorwicklung (8) aufweist, wobei die Schaltungsanordnung (2) zumindest einen Schalter (3), insbesondere einen Halbleiterschalter, sowie eine Einheit (4) zur Erzeugung und Bereitstellung einer Gleichspannung zur Speisung von zumindest einem den Schalter (3) steuerbaren elektronischen Bauteil (5) aufweist, wobei die die Gleichspannung erzeugende Einheit (4) in Reihe mit mindestens einer Motorwicklung (8) des Elektromotors (1) angeordnet ist.

## Beschreibung

Die vorliegende Erfindung betrifft eine Schaltungsanordnung zur Steuerung insbesondere zum Ein- und Ausschalten der Motorstromzufuhr eines mit einer Wechselspannung beaufschlagbaren Elektromotors, insbesondere eines Spaltpolmotors einer Pumpe, der einen Stator mit zumindest einer Motorwicklung aufweist, wobei die Schaltungsanordnung zumindest einen Schalter, insbesondere einen Halbleiterschalter, sowie eine Einheit zur Erzeugung und Bereitstellung einer Gleichspannung zur Speisung von zumindest einem den Schalter steuerbaren elektronischen Bauteil aufweist.

Elektromotoren, insbesondere in Pumpen eingesetzte Elektromotoren, werden häufig lediglich zu bestimmten Zeiten oder für bestimmte zeitliche Intervalle aktiviert bzw. deaktiviert. So sorgen beispielsweise Zirkulationspumpen, die vielfach Spaltpolmotoren aufweisen, nur zu bestimmten Tageszeiten für Wasserumlauf. Für eine schnelle und einfache Realisierung einer Zeitschaltung zur zeitabhängigen Steuerung des Elektromotors kann eine Zeitschaltuhr ergänzend zum Elektromotor verwendet werden. Bekannt und verbreitet ist hier der Einsatz von so genannten externen Steckdosentimern. Diese bieten jedoch nur in höherwertigen Ausführungen ansprechenden Bedienkomfort sowie ausreichende Steuerungspräzision und eine weitgehend lastunabhängige Lebensdauer. Die Kombination externer Zeitschaltuhren mit Elektromotoren führt zudem oft zu technischen Problemen, da die in den Zeitschaltuhren integrierte Elektronik nicht an die Anforderungen angepasst ist, die die Anwendung in Kombination mit dem Elektromotor mit sich bringt. Als Konsequenz ergibt sich bei der Zeitschaltuhr eine erheblich geringere Lebensdauer als bei dem Elektromotor, die einen wirtschaftlichen Einsatz der Zeitschaltuhr zur Steuerung hochwertiger Pumpenmotoren nicht ermöglicht.

Abhilfe wäre mit hochwertigeren Zeitschaltuhren möglich, deren Verwendung jedoch aufgrund des Kosten/ Nutzen Verhältnisses in bezug auf den Pumpenmotor unwirtschaftlich ist. Zudem sind handelsübliche Steckdosentimer nicht an das firmeneigene Bedienkonzept angepasst und bieten dem Anwender in der Kombination als externe Zeitschaltuhr und Elektromotor keinen zeitgemäßen Komfort.

Es ist bekannt, Zeitschaltuhren parallel zu dem zu steuernden Elektromotor anzuordnen, so dass sie ihre Spannungsversorgung aus beiden Zuleitungen des Elektromotors gewinnen kann. Es ist ferner bekannt und üblich, einen Schalter in eine der beiden Motorzuleitungen anzuordnen, so dass der Elektromotor einpolig ein- und ausgeschaltet werden kann. Bei der Verwendung nichtinduktiver Lasten als elektrische Verbraucher ist zur Reduzierung von Sicherheitsrisiken auch der Einsatz 2-poliger Schalter bekannt, wobei sich in jeder der beiden Motorzuleitungen jeweils ein Schalter befinden kann. Für induktive Lasten stellt diese Möglichkeit jedoch einen erheblichen Mehraufwand dar, da aufgrund der Stetigkeit des Stroms bei induktiven Lasten bei einer Stromunterbrechung durch einen Schalter, Mittel zur Weiterführung des Stroms vorhanden sein müssen. Andernfalls käme es bekanntlich zu Beschädigungen der Schaltung, insbesondere der Schaltelemente. Üblich ist hier beispielsweise der Einsatz von so genannten Freilaufdioden bei elektromechanischen Schaltern, insbesondere Relais.

Für die Ansteuerung des bzw. der Schalter sowie zur Speisung steuernder Bauelemente ist eine Spannungsversorgung notwendig, z. B. eine Einrichtung zur Erzeugung einer Gleichspannung. Hierbei finden überwiegend Transformatoren Einsatz, deren sekundärseitige Spannung gleichgerichtet und einem Kondensator zugeführt wird. Die Primärseite dieser Transformatoren ist permanent und direkt mit den netzseitigen Anschlüssen der Zeitsteuerung verbunden, so dass der Transformator parallel zum Elektromotor angeordnet ist und die steuernden Bauelemente stets mit Spannung versorgt werden können.

Für die Steuerung der Schalter werden bei Anwendungen mit geringen Anforderungen analoge Transistorschaltungen mit RC-Gliedern verwendet, über die eine Zeitkonstante definiert und damit ein Intervall bestimmt werden kann, in dem der Verbraucher ein- bzw. ausgeschaltet werden kann. Für eine präzise und zeitbezogene Aktivierung bzw. Deaktivierung des Verbrauchers ist der Einsatz von integrierten Schaltungen bekannt.

Für den Einsatz von Zeitschaltungen zur Steuerung des Motorstroms von Elektromotoren eignen sich Halbleiterschalter besonders gut, da sie den Nachteil mechanischer Schalter überwinden, im Schaltmoment den Schaltkontakt zu prellen. Dies ist ein entscheidender Grund dafür, dass handelsübliche preiswerte Schaltzeituhren, die mechanische Schalter vielfach verwenden, für hohe Anforderungen nicht eingesetzt werden können. Darüber hinaus besitzen insbesondere Halbleiterschalter wie beispielsweise Thyristoren oder Triacs die Eigenschaft, bei Erreichen des nächst folgenden Stromnullwerts, in den nicht leitenden Zustand überzugehen, so dass der Strom beim Ausschalten nicht hart unterbrochen wird. Ferner weisen Halbleiterschalter einen sehr geringen Leistungsverbrauch auf, bieten eine hohe Zuverlässigkeit und durch ihre elektronische Ansteuerung einen hohen Grad an Flexibilität, weshalb sie in modernen Schaltanwendungen eine bevorzugte Lösung darstellen.

Die Verwendung bekannter elektronischer Zeitschaltungen aus dem Stand der Technik würde schnell zu inakzeptablen Baugrößen führen, da für die Erzeugung einer niedrigen Gleichspannung (Niederspannung) zur Speisung der steuernden elektronischen Bauelemente üblicherweise ein Transformator verwendet wird, der relativ zur Schaltung gesehen groß ist. Aufgrund des magnetischen Streufeldes des Transformators und des magnetischen Streufeldes des Elektromotors, wären außerdem für die Integration der Zeitschaltung in den Klemmenkasten des Elektromotors zusätzliche Maßnahmen zur Vermeidung von störenden Wechselwirkungen zwischen Transformator und Elektromotor notwendig. Zudem wäre mindestens eine Entstördrossel zum Betrieb der Schaltung in Kombination mit dem Elektromotor erforderlich. Auch diese Entstördrossel würde einen erheblichen Platzbedarf erfordern und das EMV-Verhalten des Elektromotors negativ beeinflussen und zusätzliche Kosten mit sich bringen.

Aufgabe der vorliegenden Erfindung ist es, eine Schaltungsanordnung der eingangs genannten Art zur Steuerung des Motorstroms eines Wechselstrom- oder Drehstrommotors so zu verbessern, dass bei einfachem Schaltungsaufbau motorseitig stark wechselnde Lasten bewältigt werden, der Platzbedarf der Zeitschaltung sowie die Anzahl der benötigten Bauelemente und damit die Herstellungskosten reduziert werden, insbesondere die Notwendigkeit eines Transformators und einer Entstördrossel überflüssig wird, so dass die Störanfälligkeit vermindert, das EMV-Verhalten verbessert und die Zuverlässigkeit der Kombination von Zeitschaltung und Elektromotor erhöht wird.

Diese Aufgabe wird dadurch gelöst, dass die die Gleichspannung erzeugende Einheit der Schaltungsanordnung in Reihe mit mindestens einer Motorwicklung des Elektromotors angeordnet ist.

Es wird eine einfache Schaltungsanordnung zur Steuerung insbesondere zum Ein-und Ausschalten der Motorstromzufuhr eines mit einer Wechselspannung beaufschlagbaren Elektromotors, insbesondere eines Spaltpolmotors einer Pumpe, vorgeschlagen, der einen Stator mit zumindest einer Motorwicklung aufweist, wobei die Schaltungsanordnung zumindest einen Schalter, insbesondere einen Halbleiterschalter, sowie eine Einheit zur Erzeugung und Bereitstellung einer Gleichspannung zur Speisung von zumindest einem den Schalter steuerbaren elektronischen Bauteil aufweist, wobei die die Gleichspannung erzeugende Einheit in Reihe mit mindestens einer Motorwicklung des Elektromotors angeordnet ist.

Dies führt zu folgenden Vorteilen:

Für den Erhalt einer produktoptimierten und kundenfreundlichen Zeitsteuerung besteht die Möglichkeit, eine an die Betriebsanforderungen angepasste Zeitschaltung zu entwerfen und diese direkt in den Elektromotor bzw. in die Motorpumpe, vorzugsweise in ihren Klemmenkasten, zu integrieren.

Unter einer Zeitschaltung wird eine Schaltungsanordnung zur Steuerung eines elektrischen Verbrauchers, insbesondere eines Elektromotors, verstanden, die Mittel zur Aktivierung bzw. Deaktivierung des Elektromotors, sowie steuernde elektronische Bauelemente und eine Stromversorgung zur Speisung der elektronischen Bauteile umfasst.

Die Anordnung der die Gleichspannung erzeugende Einheit der Schaltungsanordnung in Reihe mit mindestens einer Motorwicklung des Elektromotors offenbart die Möglichkeit, die Induktivität der Motorwicklung des Elektromotors als Schutz- und Entstörkomponente zu verwenden, so dass zum einen der Einsatz von bisher stets benutzten Entstördrossein überflüssig werden kann und zum anderen ein bisher zur Erzeugung einer niedrigen Gleichspannung stets benutzter Transformator durch eine spezielle Anordnung, die insbesondere Halbleiterbauelemente umfassen kann, ersetzbar ist. Damit würde folglich die Anzahl benötigter Bauelemente, sowie der Platzbedarf und die Herstellungskosten der Schaltungsanordnung deutlich reduziert werden. Insbesondere würde die Störanfälligkeit der Schaltungsanordnung, sowie das EMV-Verhalten verbessert und die Zuverlässigkeit der Kombination Zeitschaltung und Elektromotor erhöht werden.

Eine spezielle erfindungsgemäße Lösung der der Erfindung zugrunde liegenden Aufgabe besteht darin, die die Gleichspannung erzeugende Einheit, insbesondere einen Brückengleichrichter in Reihe mit dem Halbleiterschalter und dem Elektromotor anzuordnen. Dies fordert die Notwendigkeit, den Halbleiterschalter zu umgehen, für den Fall, dass er sich im nichtleitenden Zustand befindet, damit die die Gleichspannung erzeugende Einheit auch in diesem Fall stets mit Strom versorgt wird. Dazu kann ein Bypass dienen, der z. B. eine Reihenschaltung eines Widerstands und eines Kondensators umfasst, parallel zu dem Halbleiterschalter angeordnet werden kann und einen geringen Motorstrom an dem Halbleiterschalter vorbeileitet. Ein Vorteil dieser Lösung besteht darin, dass der Bypass zudem als Entlastung des Halbleiterschalters während der Schaltzustandsübergänge des Halbleiterschalters dienen kann.

Der Halbleiterschalter zum Aktivieren bzw. Deaktivieren des Elektromotors muss als Wechselstromschalter ausgeführt sein. Für eine vorteilhafte Realisierung bietet sich hier ein Triac an, der über einen empfindlichen Steueranschluss (Gate) verfügt und über diesen gezielt und einfach angesteuert werden kann.

Die Schaltungsanordnung offenbart die Möglichkeit, eine elektronische Steuerung eines Elektromotors, ohne die Verwendung eines Transformators und einer Entstördrossel, aufzubauen, wodurch die Störanfälligkeit der Schaltung verringert und die Zuverlässigkeit der Steuerung erhöht, sowie die dynamische Reaktion auf Lastwechsel optimiert werden kann. Ferner würden zusätzliche Maßnahmen zur Kühlung der Schaltungsanordnung entfallen, da ein sich erhitzender Transformator durch Halbleiterbauelemente ersetzt werden kann. Die Verlustleistung der Zeitsteuerung würde dadurch stark reduziert, wodurch sie eine höhere Wirtschaftlichkeit und eine längere Lebensdauer aufweisen würde.

Weitere Vorteile und Merkmale der Erfindung ergeben sich aus der nachfolgenden Beschreibung und den in den Zeichnungen dargestellten Ausführungsbeispielen.

Es zeigen:
Figur 1: Blockschaltbild einer Ausführungsvariante einer erfindungsgemäßen Schaltungsanordnung für die Steuerung eines Wechselstrommotors
Figur 2: Schaltbild einer speziellen Ausführungsvariante einer erfindungsgemäßen Schaltungsanordnung für die Steuerung eines Wechselstrommotors
Figur 3: Blockschaltbild einer weiteren Ausführungsvariante einer erfindungsgemäßen Schaltungsanordnung für die Steuerung eines Wechselstrommotors
Figur 4: Blockschaltbild einer weiteren Ausführungsvariante einer erfindungsgemäßen Schaltungsanordnung für die Steuerung eines Drehstrommotors.

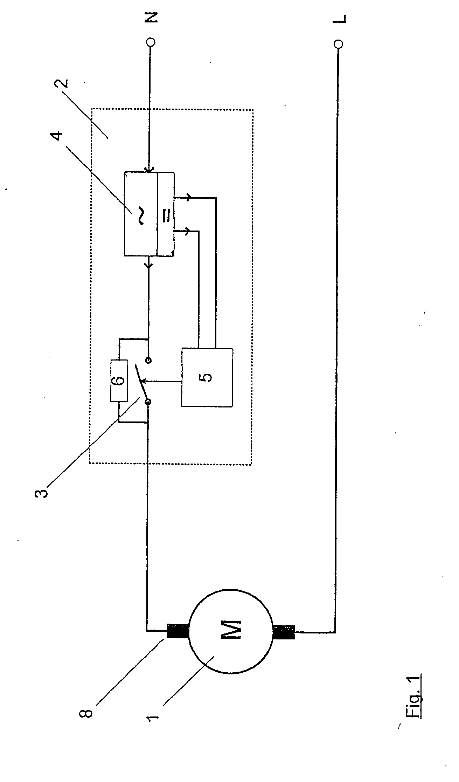

Eine erste Ausführungsvariante der Lösung der erfindungsgemäßen Aufgabe ist in dem Blockschaltbild in Figur 1 dargestellt. Es zeigt eine Schaltungsanordnung 2 zur Steuerung insbesondere zum Ein- und Ausschalten des Motorstroms eines mit einer Wechselspannung beaufschlagbaren Elektromotors 1, insbesondere eines Spaltpolmotors einer Pumpe, der einen Stator mit zumindest einer Motorwicklung 8 aufweist, wobei die Schaltungsanordnung 2 zumindest einen Schalter 3, insbesondere einen Halbleiterschalter, sowie eine Einheit 4 zur Erzeugung und Bereitstellung einer Gleichspannung zur Speisung von zumindest einem den Schalter 3 steuerbaren elektronischen Bauteil 5 aufweist, wobei die die Gleichspannung erzeugende Einheit 4 in Reihe mit mindestens einer Motorwicklung 8 des Elektromotors 1 angeordnet ist.

Der Elektromotor 1 ist in dieser Ausführungsvariante als Wechselstrommotor ausgeführt und mit einer Zuleitung mit der Phase L verbindbar, wohingegen die zweite Zuleitung der Schaltungsanordnung 2 zuführbar ist. Diese wiederum besitzt in dieser Ausführungsvariante nur zwei Zuleitungen, von denen eine Zuleitung die Schaltungsanordnung 2 mit dem Wechselstrommotor 1 und die zweite Zuleitung die Schaltungsanordnung 2 mit dem Nullleiter verbinden kann. Alternativ kann die Schaltungsanordnung auch in der anderen Zuleitung des Wechselstrommotors 1 angeordnet werden.

Im geschlossenen Zustand des Schalters 3 würde die Einheit 4 mit einer Wechselspannung beaufschlagt werden, wobei sie eine Gleichspannung zur Speisung von zumindest einem den Schalter 3 steuerbaren elektronischen Bauelement 5 erzeugen könnte. Die Gesamtheit der zur Steuerung benötigten elektronischen Bauelemente wird im Folgenden mit Steuerungseinheit 5 bezeichnet. Die Steuerungseinheit kann den vorzugsweise elektronisch ausgeführten Schalter 3 ansteuern, der den Wechselstrommotor 1 aktivieren bzw. deaktivieren kann. Im geöffneten Zustand des Schalters 3 kann eine parallel zu ihm angeordnete Bauelementgruppe 6 als Bypass dienen, die den Schalter 3 in diesem Schaltzustand überbrücken würde, so dass die die Gleichspannung erzeugende Einheit 4 stets mit Strom versorgt werden würde.

Ein bedeutendes Merkmal der Schaltungsanordnung 2, das die Weglassung der stets notwendigen Entstördrossel ermöglicht, liegt darin, durch die Reihenschaltung von Elektromotor 1 und Schaltungsanordnung 2, die Induktivität der Motorwicklung 8 selbst als Entstördrossel verwenden zu können. Darüber hinaus offenbart sich hierdurch die Möglichkeit, die Eigenschaft der Strombegrenzung der Motorwicklungsinduktivität zu nutzen und dadurch die Schaltungsanordnung 2 vor umschaltbedingten Stromspitzen in den Schaltzeitpunkten zu schützen.

Weiteres Merkmal der Schaltungsanordnung 2 in den Figuren 1 bis 4 ist die Eigenschaft, die Steuerungseinheit 5 ohne zusätzliche Zuleitungen bzw. Speisung durch eine externe Spannungsquelle ausführen zu können. Obwohl die die Gleichspannung erzeugende Einheit 4 der Schaltungsanordnung 2, in Reihe mit mindestens einer Motorwicklung 8 des Elektromotors 1 angeordnet ist, kann sie sich selbst in der benötigten Höhe mit Strom versorgen.

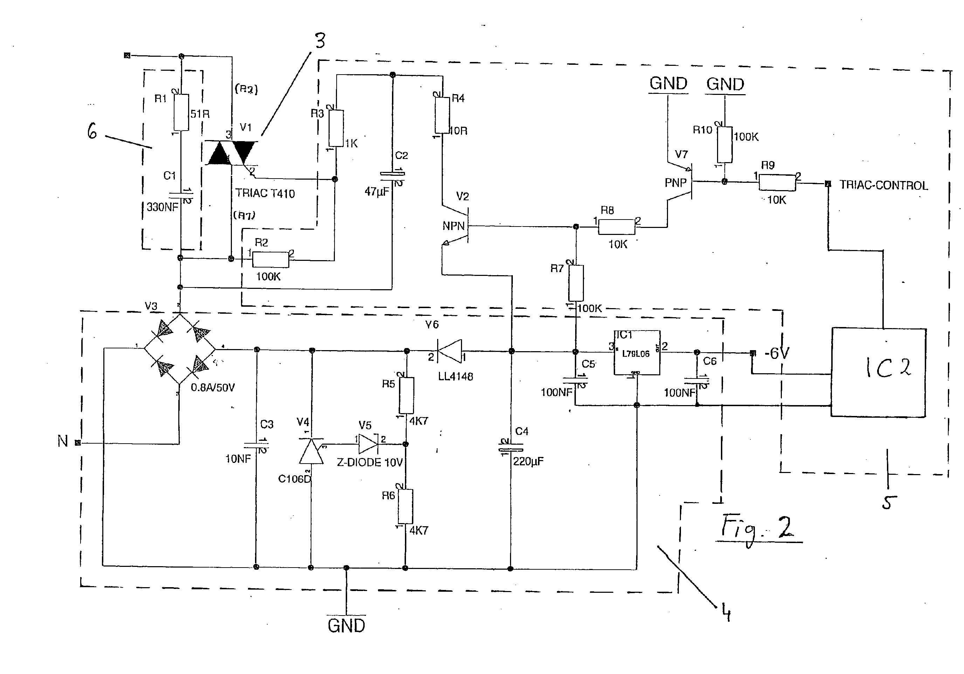

Figur 2 zeigt ein elektrisches Schaltbild einer speziellen erfindungsgemäßen Realisierung der Schaltungsanordnung, wobei im Folgenden die für die Lösung der der Erfindung zugrunde liegenden Aufgabe notwendige Arbeitsweise der Schaltungsanordnung 2 nach Figur 2 beschrieben wird.

Eine vorteilhafte Ausführung des Schalters 3 kann z. B. durch einen Triac V1 als Wechselstromschalter erreicht werden. Es wird zunächst angenommen, dass sich der Triac V1 im leitenden Zustand befindet und die Bauelemente R1 und C1 überbrückt sind. Zur Erzeugung einer geeigneten Niederspannung als Gleichspannung, die in dem zugrunde liegenden Ausführungsbeispiel vorzugsweise 20V beträgt, wobei das obere Bezugspotenzial der Gleichspannung vorzugsweise von dem Ground-Potenzial (GND) gebildet wird und sich damit ein negatives unteres Bezugspotenzial von -20V ergäbe, kann die im Folgenden beschriebene Anordnung verwendet werden.

Insbesondere kann ein Brückengleichrichter V3 in Reihe mit dem Schalter 3 angeordnet werden, wobei die Kathoden der beiden Dioden des Brückengleichrichters V3, deren Kathoden miteinander verbunden sind, das Ground-Potenzial (GND) bilden können. Gleichspannungsseitig kann bei dem Brückengleichrichter V3 ein kleiner Kondensator C3 zur Filterung hochfrequenter Anteile angeordnet werden.

Des Weiteren kann ein Kondensator höherer Kapazität, vorzugsweise ein Elektrolytkondensator C4, parallel zu C3 angeordnet werden, der die gleichgerichtete Wechselspannung glätten kann und damit eine belastbare Gleichspannung erzeugen würde. Durch die Verwendung spannungsbegrenzender Mittel kann die Gleichspannung auf eine Niederspannung reduziert werden, wobei sämtliche zur Erzeugung und Bereitstellung der Gleichspannung benötigten Bauelemente lediglich für die gewählte Niederspannung ausgelegt werden müssen

Für die Begrenzung der Spannung am Kondensator C4 kann z. B. ein Halbleiterschalter V4 benutzt werden, der vorzugsweise als ein einen Steueranschluss aufweisender Thyristor ausgeführt und parallel zu dem Kondensator C4 angeordnet werden kann, wobei seine Anode mit Ground verbunden werden kann. Der Steueranschluss des Thyristors V4, auch Gate genannt, kann über eine Zener-Diode V5 direkt mit der Gleichspannung am Kondensator C4 verbunden werden. Für eine einfache und genaue Definition der Gleichspannung, ab der der Thyristor V4 in den leitenden Zustand versetzbar ist bzw. gezündet werden kann, eignet sich zudem noch beispielsweise ein parallel zu C4 liegender ohmscher Spannungsteiler R5, R6, der vorzugsweise symmetrisch aufgebaut werden kann, was bedeutet, dass der Widerstandswert von R5 identisch dem Widerstandswert von R6 ist, wobei das mittlere Potenzial des Spannungsteilers über die Zener-Diode V5 mit dem Gate des Thyristors V4 verbunden werden kann und wobei die Anode der Zener-Diode V5 mit dem Gate des Thyristors V4 verbunden werden kann.

Die Zener-Diode V5 besitzt vorzugsweise eine Durchbruchspannung (Zener-Spannung genannt) von 10V. Erreicht die Gleichspannung während des Aufladevorgangs des Kondensators C4 durch den Motorstrom den Wert 20V (nach dem Verbraucherbezugspfeilsystem), besäße das Mittenpotenzial des Spannungsteilers R5, R6 das Potenzial -10V und die Zener-Diode V5 ginge in den leitenden Zustand über. Über den Spannungsteiler R5/ R6 und der Zener-Diode V5 könnte die am Thyristor V4 anliegende Spannung einen Strom in sein Gate treiben. Der Thyristor V4 würde gezündet werden, überbrückte somit den Kondensator C4 (auch C3) und würde den Motorstrom am Kondensator C4 vorbei leiten (Bypass). Eine Diode V6, die in Reihe mit dem Kondensator C4 angeordnet werden kann und deren Kathode mit dem negativen Gleichspannungspotenzial verbunden werden kann, würde ein unmittelbares Entladen des Kondensators C4 beim Durchschalten des Thyristors V4 verhindern.

Ein Thyristor eignet sich hier als Bypass besonders, da er eine hohe Eingangsempfindlichkeit besitzt, zuverlässig ist, schnell zündet und im Vergleich zu einem Triac preiswerter ist.

Die dem Kondensator C4 nachgeschalteten, ihn belastenden Bauelemente würden ihm nach dem Zünden des Thyristors V4 die Energie entziehen und seine Spannung würde sinken. Fiele die an ihm anliegende Spannung unter 20V (nach dem Verbraucherbezugspfeilsystem), würde zunächst die Zener-Diode V5 und anschließend auch der Thyristor V4 sperren, sobald der durch den Thyristor V4 fließende Strom den Wert null erreichen würde, d.h. er würde am Ende der fließenden Stromhalbwelle abschalten. Der Motorstrom fließe anschließend in den Kondensator C4 und würde diesen erneut aufladen. Sobald die Spannung zwischen seinen Anschlüssen 20V wieder übersteigt, würde sich der gesamte beschriebene Vorgang wiederholen.

Die Dauer des Entladevorgangs ist abhängig von der Stromaufnahme der Steuerungseinheit 5. Die Dauer des Ladevorgangs des Kondensators C4 und damit die Dauer bis zum Wiedereinschalten des Thyristors V4 hängt vom fließenden Motorstrom und von der Stromaufnahme der Steuerungseinheit 5 ab. Ferner ist für die Dauer beider Vorgänge der Ausgangsladezustand des Kondensators C4 relevant.

Die Einheit 4 zur Erzeugung der gewünschten Gleichspannung, insbesondere einer Niederspannung, kann somit einen Brückengleichrichter V3, einen Kondensator C4, einen Thyristor V4, eine Zener-Diode V5 und eine Diode V6 umfassen, wobei diese Bauelemente lediglich für den Wert der Niederspannung dimensioniert werden bräuchten. Die Einheit 4 würde daher mit geringer Verlustleistung und hoher Zuverlässigkeit arbeiten.

Da der Brückengleichrichter V3 in der beschriebenen Anordnung gleichspannungsseitig vorzugsweise eine Niederspannung aufweist, muss er auch wechselspannungsseitig keine hohen Spannungen verarbeiten, jedoch aufgrund seiner Anordnung in Reihe zu einer Motorwicklung des Elektromotors 1 den vollen Motorstrom tragen.

Zur Erzeugung einer sauberen und gut geglätteten Gleichspannung kann dem Kondensator C4 ein Spannungsregler IC1 nachgeschaltet werden, der vorzugsweise eine Spannung von -6V ausgibt und die Steuerungseinheit 5 versorgt, die vorzugsweise einen Mikroprozessor beinhaltet.

Zusammenfassend ergäbe sich, dass zu Beginn jeder Stromhalbwelle des Motorstroms der Thyristor V4 ausgeschaltet sein würde. Die Spannung zwischen seinem Anoden- und Kathodenanschluss würde steigen, bis der Kondensator C4 auf die durch die Zener-Diode V5 und den Spannungsteiler R5, R6 definierte Spannung aufgeladen wäre, die im zugrunde liegenden Beispiel 20V beträgt. Der Thyristor V4 würde zünden und der Ladevorgang des Kondensators C4 wäre beendet, wobei der Motorstrom am Kondensator C4 vorbeigeleitet werden würde. Für den Rest der Stromhalbwelle bediente sich die Steuerungseinheit 5 der in Kondensator C4 gespeicherten Energie.

Es sei angemerkt, dass in einer weiteren nicht dargestellten Ausführungsvariante der Schaltungsanordnung 1, der Brückengleichrichter V3 für die Erzeugung der Gleichspannung nicht zwingend erforderlich ist. Alternativ kann der Thyristorzweig (V4, V5, R5, R6, V6 und C4 umfassend) auch direkt in Reihe zu dem Halbleiterschalter V1 und dem Elektromotor 1 angeordnet werden. Da ein Thyristor jedoch nur Halbwellen einer Polarität verarbeiten kann, würde dies eine weitere Diode erfordern, die antiparallel zum Thyristor V4 geschaltet werden müsste und die die "falsche" Halbwelle an ihm vorbeileiten würde. Der Kondensator C4 würde damit nur bei jeder zweiten Halbwelle geladen werden und müsste folglich vergrößert werden, um stets genügend Energie für die Steuerungseinheit 5 zur Verfügung stellen zu können.

Es sei ferner angemerkt, dass der Thyristor V4 niemals dauerhaft abschalten darf, da sonst sämtliche für eine Niederspannung ausgelegte Bauelemente durch eine Aufladung des Kondensators auf den Scheitelwert der Netzspannung zerstört werden würden. Die Zuverlässigkeit der beschriebenen Thyristorschaltstufe (V4, V5, R5, R6) verhindert jedoch das Eintreten eines derartigen Falls.

Der Schalter 3 zur Steuerung der Motorstromzufuhr eines mit einer Wechselspannung beaufschlagbaren Elektromotors 1, ist vorzugsweise in Reihe mit dem Elektromotor 1 und der die Gleichspannung erzeugenden Einheit 4 anzuordnen. Er ist in einer vorteilhaften Ausführung als ein Wechselstromschalter zu wählen, damit sowohl die positive als auch die negative Halbwelle des Motorstroms von ihm geleitet werden kann und somit nur ein Bauteil erforderlich wäre. Es bietet sich hier an, z. B. einen Triac V1 zu verwenden, der über einen Steueranschluss (Gate) verfügt sowie über diesen gezündet und damit in den leitenden Zustand versetzt werden kann.

Die Reihenschaltung aus Elektromotor 1 und Schaltungsanordnung 2 bringt es mit sich, dass bei nichtleitendem Triac V1 kein Stromfluss zur Speisung der die Gleichspannung erzeugende Einheit 4 bzw. zum Laden des Kondensators C4 vorläge. Es ist deshalb erforderlich, einen minimalen Strom an dem Triac V1 vorbeizuführen. Für geringe Leistungen bietet sich dazu beispielsweise ein Kondensator C1 als Bypass 6 an. In Kombination mit einem Widerstand R könnte die Funktion des Bypass 6 erweitert werden, wobei er dann zusätzlich als Entlastungsnetzwerk für den Triac V1 dienen würde.

Um mit kleinen Kondensatoren auszukommen, ist es für die Erzeugung der Gleichspannung erforderlich, beide Stromhalbwellen auszunutzen. Die Verwendung eines Brückengleichrichters V3 in der die Gleichspannung erzeugenden Einheit 4 ist deshalb eine bevorzugte Lösung.

Der Triac V1 kann ein Steuersignal erhalten, das von der Niederspannungsseite aus gesteuert werden kann. Die Erzeugung des Steuersignals kann durch ein elektronisches Bauteil, vorzugsweise einen Mikroprozessor erfolgen, wobei das Steuersignal einer Transistorschaltstufe zur Signalaufbereitung zugeführt werden kann. Für die Realisierung der Transistorschaltstufe bieten sich insbesondere Bipolartransistoren an, die preiswert und zuverlässig sind. Hochwertige moderne Halbleiterschalter, insbesondere Triacs, können jedoch auch derart schnelle und sensitive Steuereingänge aufweisen, so dass eine direkte Ansteuerung über eine elektronische Einheit, beispielsweise einen Mikroprozessor, möglich wäre.

In einer vorteilhaften Ausführung kann die Transistorschaltstufe aus zwei kaskadiert angeordneten Bipolartransistoren gebildet und mit einer Spannung beaufschlagt werden, dessen oberes Potenzial Ground und dessen unteres Potenzial durch die erzeugte Gleichspannung festlegbar ist.

Im leitenden Zustand des Triac V1 würde die Transistorschaltstufe den Steueranschluss des Thyristors V4 über eine Widerstand- Kondensator-Anordnung, mit der das Steuersignal für den Triac V1 geglättet werden kann, mit der Gleichspannung verbinden.

Diese vorteilhafte Ausführung offenbart ein wichtiges sicherheitstechnisches Merkmal, da bei ausbleibender Gleichspannung über die Transistorschaltstufe kein Strom in das Gate des Triac V1 getrieben werden würde. Er ginge folglich bei ausbleibender Gleichspannung automatisch in den nichtleitenden Zustand über.

Die Ausführungsvariante der Schaltungsanordnung mit Brückengleichrichter offenbart zudem noch ein weiteres vorteilhaftes und nutzbares Merkmal, nämlich die Erfassung und Nutzung eines netzsynchronen Rechtecksignals, mit Hilfe dessen die Zeitpunkte des Spannungsnulldurchganges am Triac bestimmt werden können und somit der Triac V1 zur Vermeidung von Stromspitzen speziell zu diesen Zeitpunkten geschaltet werden könnte. Die Erzeugung eines netzsynchronen Rechtecksignals wäre alternativ nur mit Widerstandsteilerketten zum Herunterteilen einer netzsynchronen Spannung, insbesondere der Netzspannung, möglich. Dies würde wiederum den Schaltungsaufwand erhöhen und unnötige Verlustleistung mit sich bringen.

Das Rechtecksignal läge beispielsweise zwischen den Anschlüssen 2 und 4 des Brückengleichrichters V3 (siehe Figur 2) vor, besäße die gleiche Frequenz, wie die speisende Spannung, sowie eine halbe Periode eine Amplitude der Höhe der Gleichspannung und eine halbe Periode eine Amplitude der Höhe der Durchflussspannung der Diode (ca. 0.7V) des Brückengleichrichters V3, die zwischen seinen Anschlüssen 2 und 4 läge. Die Triac-Ansteuerung könnte folglich mit Hilfe des Rechtecksignals mit dem speisenden Netz synchronisiert werden.

Würde der Halbleiterschalter V1 zu Zeitpunkten geschaltet werden, in denen an ihm eine hohe Spannung anläge, könnte es zu starken Stromspitzen kommen, die nur durch die Motorwicklungsinduktivität begrenzt werden würde. Zur Schonung des Schalters kann der Bypass 6 dienen, der in dieser Funktion auch als Snubber-Netzwerk bekannt ist und eine Reihenschaltung aus einem Widerstands R1 und einem Kondensator C1 umfasst, die parallel zum Triac V1 angeordnet werden kann.

Das Steuersignal für den Triac V1 kann über geeignete Mittel, beispielsweise durch eine Widerstand-Kondensator-Anordnung, die im Ausführungsbeispiel von Figur 2 die Bauelemente R2, R3 und C3 umfasst, geglättet werden, so dass der Triac V1 einen kontinuierlichen und gesiebten Gate-Strom erhält.

Es sei angemerkt, dass die die Erfindung betreffende lastoptimierte Schaltungsanordnung 2 nicht auf die Verwendung als Zeitsteuerung der eingangs beschriebenen Art beschränkt ist. Vielmehr ermöglicht die vorgeschlagene Schaltungsanordnung 2 eine beliebige Schaltfolge, die Zeit-gesteuert, Intervallgesteuert, Zufalls-gesteuert oder dergleichen, realisiert werden kann. Auch eine Sensor-gesteuerte Aktivierung bzw. Deaktivierung des Elektromotors durch die Erfassung und Verarbeitung einer externen Größe durch die Steuereinheit 5 wäre möglich.

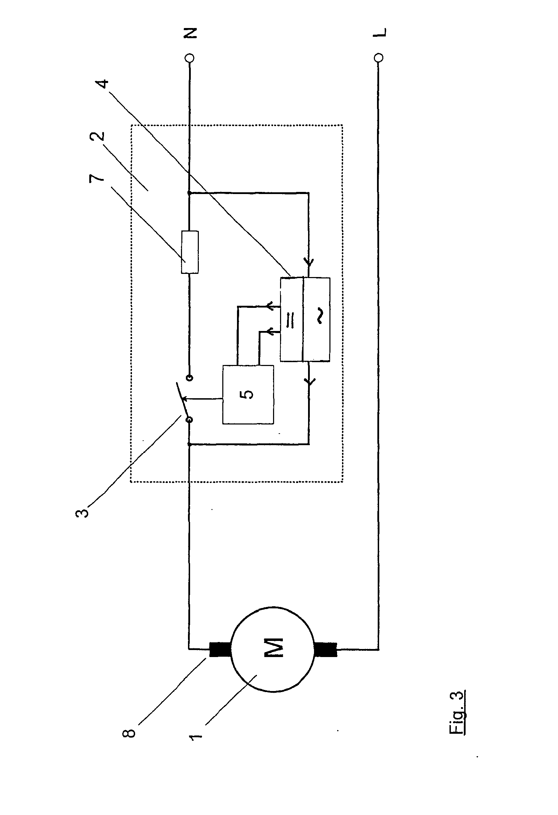

Eine weitere Ausführungsvariante einer erfindungsgemäßen Schaltungsanordnung zeigt das Blockschaltbild in Figur 3. Es unterscheidet sich von dem Blockschaltbild in Figur 1 dahingehend, dass die die Gleichspannung erzeugende Einheit 4 nicht in Reihe mit dem Schalter 3, sondern parallel zu ihm angeordnet werden kann. Damit auch bei geschlossenem Schalter 3 die Einheit 4 mit einer Spannung versorgt werden kann, müsste ein Bauelement 7 in Reihe zu dem Schalter 3 angeordnet werden, an dem eine Spannung aufgestaut werden kann. Es bietet sich hier insbesondere ein Shunt an, der vorzugsweise als aktiver Shunt ausgeführt sein kann.

Für eine produktoptimierte und kundenfreundliche Ausführung der auf alle Ausführungsvarianten bezogenen Schaltungsanordnung 2, die zudem einen zeitgemäßen Komfort bietet, eignet sich zum Beispiel die Kombination der Schaltungsanordnung 2 mit einer Einheit zur Anzeige und Bedienung der Steuerung, vorzugsweise einem Display mit Bedienknöpfen oder einem Display mit einem so genannten Touchpanel. Für eine einfache und komfortable Bedienung bietet sich die Anordnung eines derartigen Bedienelements in dem Klemmenkasten einer erfindungsgemäßen Motorpumpe mit Spaltpolmotor an.

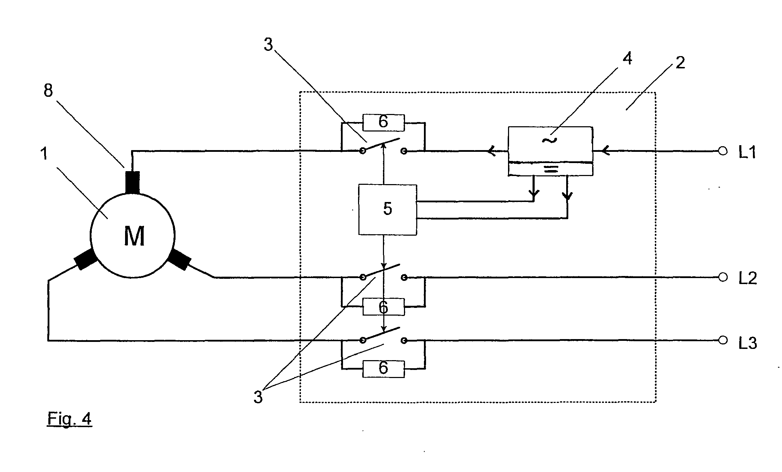

Figur 4 zeigt eine Ausführungsvariante der erfindungsgemäßen Schaltungsanordnung 2 für die Anwendung der Steuerung der Motorstromzufuhr auf einen Drehstrommotor 1. Hier wären insbesondere zwei weitere Schalter 3 notwendig, vorzugsweise Halbleiterschalter der oben beschriebenen Art, die in den beiden anderen der drei Zuleitungen angeordnet sein können und ebenfalls von der Steuerungseinheit 5 angesteuert werden können. In einer bevorzugten Variante können beide Schalter 3 synchron geschaltet werden.

In einer weiteren nicht dargestellten Ausführungsvariante kann die Schaltungsanordnung 2 zur Steuerung der Motorstromzufuhr eines Drehstrommotors 1 auch eine eine Gleichspannung erzeugende Einheit 4 nach Figur 3 aufweisen, die parallel zu einem der drei Schalter 3 nach Figur 4 und einer eine Spannung aufstauende Einrichtung 7 angeordnet werden.

Es sei darauf hingewiesen, dass die Schaltungsanordnung 2 nicht ausschließlich auf den Einsatz der Steuerung der Motorstromzufuhr eines mit einer Wechselspannung beaufschlagbaren Elektromotors 1 beschränkt ist. Vielmehr kann auch ein beliebiger Wechselstromverbraucher durch die offenbarte Schaltungsanordnung geschaltet werden.

Der offenbarte Vorschlag zur Steuerung der Motorstromzufuhr eines mit einer Wechselspannung beaufschlagbaren Elektromotors mit Hilfe eines in Reihe zu einer seiner Motorwicklungen angeordneten elektronischen Wechselstromschalter, insbesondere eines einen Steueranschluss aufweisenden Triacs V1, ist durch ein reines Ein- und Ausschalten dieses Triac V1 gekennzeichnet, der im leitenden Zustand über seinen Steueranschluss einen kontinuierlichen Gate-Strom erhält. In einer weiteren Ausführungsvariante der Schaltungsanordnung zur Steuerung eines Wechselstrommotors kann mit Hilfe des Wechselstromschalters auch eine Drehzahlsteuerung realisiert werden. Bei dieser speziellen Ausführungsvariante würde der Steueranschluss des Triac V1, der auch in diesem Fall eine bevorzugte Wahl darstellen würde, mit regelmäßigen, periodischen Zündimpulsen beaufschlagt werden, wobei innerhalb jeder Spannungshalbwelle ein Zündimpuls vorzugeben wäre. Je nach zeitlicher Lage des Zündimpulses innerhalb der Spannungshalbwelle kann im Mittel die an dem Wechselstrommotor 1 anliegende Spannung und damit auch die Drehzahl vorgegeben werden.

Mit den genannten Ausführungen wird eine Erfindung vorgeschlagen, die eine Schaltungsanordnung 2 zur Steuerung insbesondere zum Ein- und Ausschalten der Motorstromzufuhr eines mit einer Wechselspannung beaufschlagbaren Elektromotors 1, insbesondere eines Spaltpolmotors einer Pumpe, der einen Stator mit zumindest einer Motorwicklung 8 aufweist, wobei die Schaltungsanordnung 2 zumindest einen Schalter 3, insbesondere einen Halbleiterschalter, sowie eine Einheit 4 zur Erzeugung und Bereitstellung einer Gleichspannung zur Speisung von zumindest einem den Schalter 3 steuerbaren elektronischen Bauteil 5 aufweist, wobei die die Gleichspannung erzeugende Einheit 4 in Reihe mit mindestens einer Motorwicklung 8 des Elektromotors 1 angeordnet ist.

## Patentansprüche

1. Schaltungsanordnung (2) zur Steuerung insbesondere zum Ein- und Ausschalten der Motorstromzufuhr eines mit einer Wechselspannung beaufschlagbaren Elektromotors (1), insbesondere eines Spaltpolmotors einer Pumpe, der einen Stator mit zumindest einer Motorwicklung (8) aufweist, wobei die Schaltungsanordnung (2) zumindest einen Schalter (3), insbesondere einen Halbleiterschalter, sowie eine Einheit (4) zur Erzeugung und Bereitstellung einer Gleichspannung zur Speisung von zumindest einem den Schalter (3) steuerbaren elektronischen Bauteil (5) aufweist,
**dadurch gekennzeichnet,**
- **dass** die die Gleichspannung erzeugende Einheit (4) in Reihe mit mindestens einer Motorwicklung (8) des Elektromotors (1) angeordnet ist.

2. Schaltungsanordnung nach Anspruch 1,
**dadurch gekennzeichnet,dass**diedieGleichspannung erzeugende Einheit (4) in Reihe mit dem Schalter (3) oder parallel zu einer Reihenschaltung aus dem Schalter (3) und einer spannungsaufstauenden Einrichtung (7) angeordnet ist.

3. Schaltungsanordnung nach Anspruch 1 oder 2,
**dadurch gekennzeichnet,dass**dieEinheit(4)zur Erzeugung der Gleichspannung einen Brückengleichrichter (V3) aufweist, der in Reihe mit dem Schalter (3) und mindestens einer Motorwicklung (8) des Elektromotors (1) sowie parallel zu einem Kondensator (C4) angeordnet ist.

4. Schaltungsanordnung nach Anspruch 3,
**dadurch gekennzeichnet, dass** die beiden gleichspannungsseitigen Anschlüsse des Brückengleichrichters (V3) durch einen Schalter, vorzugsweise durch einen einen Steueranschluss aufweisenden Thyristor (V4) verbunden sind, wobei im leitenden Zustand des Thyristors (V4) die gleichgerichtete Wechselspannung kurzgeschlossen ist.

5. Schaltungsanordnung nach Anspruch 1 oder 2,
**dadurch gekennzeichnet, dass** die Einheit (4) zur Erzeugung der Gleichspannung einen elektronischen Schalter, vorzugsweise einen einen Steueranschluss aufweisenden Thyristor (V4) mit einer antiparallel zu ihm angeordneten Diode aufweist, der in Reihe mit dem Schalter (3) und mindestens einer Motorwicklung (8) des Elektromotors (1) sowie parallel zu einem Kondensator (C4) angeordnet ist.

6. Schaltungsanordnung nach Anspruch 4 oder 5,
**dadurch gekennzeichnet,dass**derThyristor(V4)bei Erreichen einer definierbaren Kondensatorspannung des Kondensators (C4) schaltbar ist.

7. Schaltungsanordnung nach Anspruch 6,
**dadurch gekennzeichnet, dass** der Steueranschluss des Thyristors (V4) über Mittel zur Definition der gewünschten Gleichspannung, vorzugsweise einer Zener-Diode (V5), mit dem Kondensator (C4) verbunden ist.

8. Schaltungsanordnung nach einem der vorherigen Ansprüche,
**dadurch gekennzeichnet, dass** zur Verhinderung einer unmittelbaren Entladung des Kondensators (C4) durch den in den leitenden Zustand versetzten Thyristor (V4) eine Diode (V6) in Reihe zum Kondensator (C4) angeordnet ist.

9. Schaltungsanordnung nach einem der vorherigen Ansprüche,
**dadurch gekennzeichnet, dass** zur Stabilisierung und Glättung der Gleichspannung sowie zur Speisung von zumindest einem den Schalter (3) steuerbaren elektronischen Bauteil (5) ein elektronischer Spannungsregler (IC1) verwendbar ist.

10. Schaltungsanordnung nach einem der vorherigen Ansprüche,
**dadurch gekennzeichnet, dass** der Schalter (3) ein Wechselstromschalter, insbesondere ein einen Steueranschluss (Gate) aufweisender Triac (V1) ist, dessen Steueranschluss mit einem Steuersignal, insbesondere mit einem Gate-Strom, beaufschlagbar ist.

11. Schaltungsanordnung nach Anspruch 10,
**dadurch gekennzeichnet, dass** dem Triac (V1) eine Reihenschaltung aus einem Widerstand (R1) und einem Kondensator (C1) parallel geschaltet ist, wobei bei nichtleitendem Triac (V1) ein geringer Motorstrom an dem Triac (V1) vorbeileitbar ist.

12. Schaltungsanordnung nach Anspruch 10 oder 11,
**dadurch gekennzeichnet, dass** Mittel zur Glättung und Siebung des Gate-Stroms, insbesondere eine Widerstand-Kondensator- Anordnung (R4, R3, C2) vorhanden ist, so dass für den Triac (V1) ein kontinuierlicher Gate-Strom erhaltbar ist.

13. Schaltungsanordnung nach einem der vorherigen Ansprüche,
**dadurch gekennzeichnet, dass** Mittel (5) zur Steuerung des Schalters (3), insbesondere ein ein Steuersignal erzeugbarer Mikroprozessor (IC2), und Mittel zur Aufbereitung des Steuersignals, insbesondere eine Transistorschaltstufe, vorhanden sind.

14. Schaltungsanordnung nach Anspruch 13,
**dadurch gekennzeichnet, dass** die Transistorschaltstufe insbesondere aus zwei kaskadiert angeordneten Bipolartransistoren (V2, V7) aufbaubar ist.

15. Schaltungsanordnung nach einem der vorherigen Ansprüche,
**dadurch gekennzeichnet, dass** die Gleichspannung negativ ist.

16. Schaltungsanordnung nach einem der Ansprüche 1 bis 4 oder 6 bis 15,
**dadurch gekennzeichnet, dass** zur Synchronisierung des Steuersignals des Triac (V1) mit der Netzspannung ein netzsynchrones Signal, insbesondere ein Rechtecksignal, am Brückengleichrichter (V3) erfassbar ist.

17. Schaltungsanordnung nach einem der vorherigen Ansprüche,
**dadurch gekennzeichnet,dass**dielnduktivitätder Motorwicklung (8) als Schutz und/ oder Entstörkomponente verwendbar ist .

18. Schaltungsanordnung nach einem der vorherigen Ansprüche,
**dadurch gekennzeichnet, dass** sie in einem Klemmenkasten des Elektromotors angeordnet ist.

19. Pumpe mit Pumpenmotor (1), die in der Umgebung des Pumpenmotors (1), vorzugsweise im Klemmenkasten, eine Schaltungsanordnung (2) zur Steuerung des Motorstroms, insbesondere eine Zeitschaltuhr, aufweist, die ihre Versorgungsspannung nur aus einer Zuleitung des Pumpenmotors (1) gewinnt.

20. Verfahren zur Steuerung des Motorstroms eines mit einer Wechselspannung beaufschlagbaren Elektromotors (1), insbesondere eines Spaltpolmotors einer Pumpe, der einen Stator mit zumindest einer Motorwicklung (8) aufweist,
**dadurch gekennzeichnet dass** eine Einheit (4) zur Erzeugung und Bereitstellung einer Gleichspannung zur Speisung von zumindest einem einen Schalter steuerbaren elektronischen Bauteil (5) in Reihe mit mindestens einer Motorwicklung (8) des Elektromotors (1) angeordnet wird.
